# EUROPEAN PATENT SPECIFICATION

(11) **EP 3 056 709 B1**
(45) Date of publication and mention of the grant of the patent: **12.08.2020**
(21) Application number: 15155137.1
(22) Date of filing: 13.02.2015
(51) Int. Cl.: F01P 3/20, F02B 29/04

(54) **Cooling system for an internal combustion engine**
Kühlsystem für einen Verbrennungsmotor
Système de refroidissement pour moteur à combustion interne

(43) Date of publication of application: 17.08.2016
(73) Proprietor: Caterpillar Motoren GmbH & Co. KG, 24159 Kiel (DE)
(72) Inventor: Sturm, Michael, 24214 Gettorf (DE); Wagener, Benjamin, 23795 Schackendorf (DE); Hannemann, Gerd, 24784 Westerrönfeld (DE)
(74) Representative: BRP Renaud & Partner mbB Rechtsanwälte Patentanwälte Steuerberater

(56) References cited:
- DE-A1- 2 610 378
- DE-B- 1 223 196
- FR-A1- 2 997 758
- US-A1- 2013 298 554

## Description

### Technical Field

The present disclosure relates to a cooling system for an internal combustion engine, and more particularly to a cooling system for a turbocharged internal combustion engine.

### Background

Cylinder cooling jackets for internal combustion engines usually require a coolant medium to be within a narrow temperature range at the inlet of the cylinder cooling jacket such that the internal combustion engine operates as desired. For example, is the inlet temperature too high, the engine block including the cylinder unit, cylinder liner and cylinder head may not be cooled as desired, and, as a result, the engine may produce more exhaust emissions or require a higher amount of fuel to provide a desired power output.

Cylinder cooling jackets are often connected in a cooling circuit to other components of the engine cooling system, such as to a charge air cooler configured to cool charge air of a turbocharger. For a desired operation of the internal combustion engine, the charge air should have a low inlet temperature at the cylinder unit.

The demand for a low temperature of the charge air and the demand for a low temperature of the coolant medium at the inlet of the cylinder unit are, however, two contradicting demands. To meet those demands, currently, two separate cooling systems for internal combustion engines are required. Thus, the internal combustion engine is equipped with either a cooling system tuned to achieve a low coolant medium inlet temperature, or a cooling system tuned to achieve a low charge air inlet temperature.

US 2013/298554 A1 discloses a coolant system for conditioning the intake air to an internal combustion engine. The coolant system includes valves that can be actuated so to define a first cooling loop, a second cooling loop and a third cooling loop.

FR 2 997 758 A1 discloses a thermal loop for a motor vehicle. The thermal loop comprises a heat exchanger, a cooler and an actuator for reversing the direction of flow of the heat transfer fluid.

Further cooling systems for vehicles are known from DE 26 10 378 A1 and DE 12 23 196 B.

The present disclosure is directed, at least in part, to improving or overcoming one or more aspects of prior systems.

### Summary of the Disclosure

The above object is solved by a cooling system according to claim 1, the use of a set of interchangeable pipe units according to claim 13 for configuring a cooling system and method according to claim 15 for configuring a cooling system. Further developments are given in the dependent claims.

According to an aspect of the present disclosure, a cooling system for an internal combustion engine including a cylinder unit is disclosed. The cooling system comprises a cooling circuit portion configured to circulate a flow of coolant. The cooling circuit portion includes a cooling circuit portion outlet and a cooling circuit portion inlet. The cooling circuit portion outlet and the cooling circuit portion inlet define a flow direction of coolant within the cooling circuit portion from the cooling circuit portion inlet to the cooling circuit portion outlet, The cooling system further comprises a charge air cooler configured to transfer heat from charge air to the coolant. The charge air cooler includes a first charge air cooler port and a second charge air cooler port. The cooling system further comprises a cylinder cooling jacket configured to transfer heat from the cylinder unit to the coolant. The cylinder cooling jacket includes a cylinder cooling jacket inlet and a cylinder cooling jacket outlet. In a first cooling configuration of the cooling system, the cooling circuit portion outlet is connected to the first charge air cooler port, the second charge air cooler port is connected to the cylinder cooling jacket inlet, and the cylinder cooling jacket outlet is connected to the cooling circuit portion inlet. In a second cooling configuration of the cooling system, the cooling circuit portion outlet is connected to the cylinder cooling jacket inlet, the cylinder cooling jacket outlet is connected to the second charge air cooler port, and the first charge air cooler port is connected to the cooling circuit portion inlet.

According to another aspect of the present disclosure, a use of a set of interchangeable pipe units for configuring a cooling system of an internal combustion engine in a first cooling configuration and in a second cooling configuration is disclosed. The cooling system includes a charge air cooler piping with a first charge air cooler connection portion and a second charge air cooler connection portion, a cylinder cooling jacket with a cylinder cooling jacket inlet and a cylinder cooling jacket outlet, and a cylinder cooling jacket piping with a first cylinder cooling jacket connection portion and a second cylinder cooling jacket connection portion. The set of interchangeable pipe units includes a direct-pipe unit and a cross-pipe unit. In the first cooling configuration, the direct-pipe unit is configured to connect the second charge air cooler connection portion to the cylinder cooling jacket inlet, and the cylinder cooling jacket outlet to the first cylinder cooling jacket connection portion. In the second cooling configuration, the cross-pipe unit is configured to connect the cylinder cooling jacket inlet to the first cylinder cooling jacket connection portion, and the cylinder cooling jacket outlet to the second charge air cooler connection portion.

According to another aspect of the present disclosure, an internal combustion engine is disclosed. The internal combustion engine comprises a cylinder unit, a turbocharger configured to provide charge air to the cylinder unit, and a cooling system as exemplary disclosed herein.

According to another aspect of the present disclosure, a method for configuring a cooling system for an internal combustion engine is disclosed. The cooling system includes a cooling circuit portion, a charge air cooler, and a cylinder cooling jacket with a cylinder cooling jacket inlet and a cylinder cooling jacket oulet. The cooling system further includes a first cooling configuration and a second cooling configuration. The method comprises determining a first coolant outlet temperature at the cylinder cooling jacket oulet for the first cooling configuration. The method further comprises determining a second coolant outlet temperature at the cylinder cooling jacket outlet for the second cooling configuration. The method further comprises configuring the cooling system in the second cooling configuration if the first coolant outlet temperature exceeds a first threshold outlet temperature. The method further comprises configuring the cooling system in the first cooling configuration if the second coolant outlet temperature does not exceed a second threshold outlet temperature.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary cooling system for cooling an internal combustion engine wherein the cooling system is in a first cooling configuration;
Fig. 2 shows a schematic drawing of an exemplary cooling system for cooling an internal combustion engine wherein the cooling system is in a second cooling configuration;
Fig. 3 shows an exemplary embodiment of a cross-pipe unit used in the cooling system in the second cooling configuration; and
Fig. 4 shows a schematic flow diagram of an exemplary strategy for configuring a cooling system for an internal combustion engine.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a single, modular cooling system for an internal combustion engine may be able to provide both a low charge air temperature and a required coolant temperature at the cylinder cooling jacket inlet.

The present disclosure is further at least partly based on the realization that the single, modular cooling system may be configured in two cooling configurations to meet both demands for a wide range of coolant supply temperatures. For low coolant supply temperatures of, for example, 60°C, the modular cooling system may be configured in a first cooling configuration, where the charge air cooler may be arranged downstream of the cylinder cooling jacket with respect to a flow direction of coolant, thereby increasing a thermal heat transfer between the cold coolant and the hot charge air. For high coolant supply temperatures of, for example, 75°C or more, the modular cooling system may be configured in a second cooling configuration, where the cylinder cooling jacket may be arranged upstream of the charge air cooler with respect to the flow direction of coolant, thereby ensuring that the coolant inlet temperature at the cylinder cooling jacket corresponds to the required coolant inlet temperature despite the high coolant supply temperature.

The present disclosure is further at least partly based on the realization that in both cooling configurations a coolant supply port, a coolant return port, a flow direction of coolant between the coolant supply and coolant return ports, a flow direction of coolant within the cylinder cooling jacket, and any secondary cooling circuit, such as district heating circuits of the cooling system may be the same for the first and the second cooling configuration.

The present disclosure is further at least partly based on the realization that both cooling configurations may be achieved using on-engine modifications only, which may reduce costs and efforts to provide both a low charge air temperature and a low coolant temperature at the cylinder cooling jacket inlet over the wide range of coolant supply temperatures.

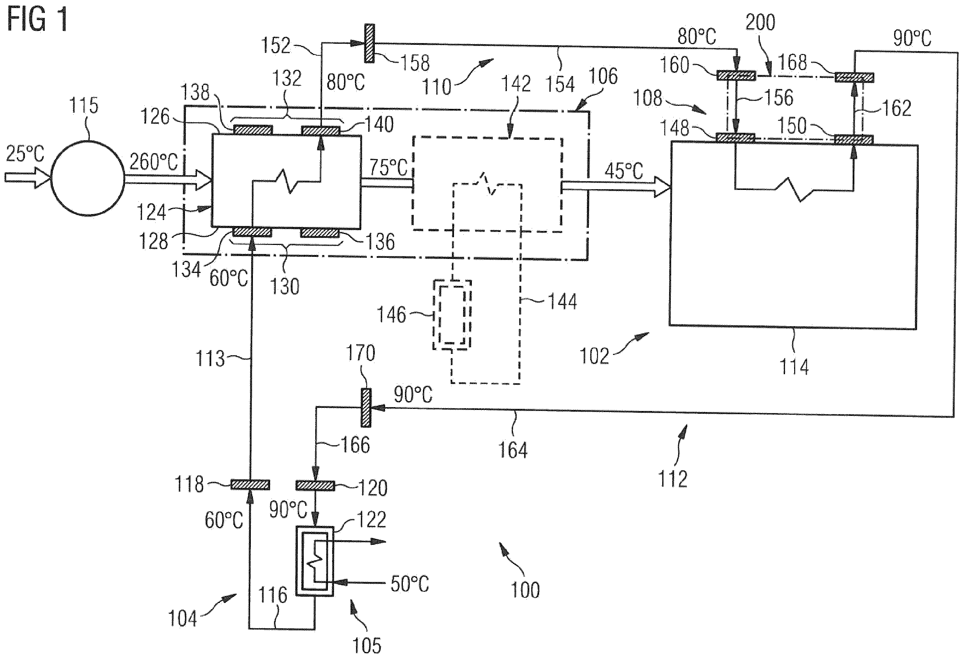

Referring now to the drawings, Fig. 1 shows schematic drawing of an exemplary embodiment of a cooling system 100 of an internal combustion engine 102 wherein cooling system 100 is in a first cooling configuration.

Internal combustion engine 102 includes a cylinder unit 114, such as, for example, a diesel, heavy fuel, or gas powered cylinder unit. Cylinder unit 114 may include a plurality of cylinders and a plurality of piston assemblies disposed within the cylinders (not shown). Cylinder unit 114 may include any number of cylinders, and the cylinders may be disposed in an "in-line" configuration, a "V" configuration, or in any other conventional configuration. Cylinder unit 114 may further include a cylinder head (not shown) configured to close the cylinder from on top, and a cylinder liner (not shown) configured to guide a piston of cylinder unit 114 during an up- and downward movement of the piston within the cylinder.

Multiple sub-systems may be included in internal combustion engine 102 to support combustion processes in cylinder unit 114. Among others, internal combustion engine 102 includes a turbocharger 115 and a cooling system 100. Internal combustion engine 102 may further include other sub-systems and components not shown in Fig. 1, such as a fuel supply system for supplying fuel to cylinder unit 114, an exhaust gas system for discharging exhaust gas of cylinder unit 114 to the environment, and a control unit for controlling operation of internal combustion engine 102.

Turbocharger 115 is configured to receive ambient air, compress the ambient air and discharge charge air. By compressing the ambient air, a temperature of the ambient air may increase, for example, from about 25°C to about 260°C. Turbocharger 115 may further include a compressor (not shown) for compressing the ambient air, and a turbine (not shown) driven by exhaust gas of cylinder unit 114.

Cooling system 100 includes a cooling circuit portion 104, a charge air cooler 106, a cylinder cooling jacket 108, a charge air cooler piping 110, a cylinder cooling jacket piping 112, and a cooling circuit portion connection piping 113, which together define a cooling circuit. Cooling system 100 may further include temperature sensors (not shown) for detecting a temperature of the coolant. Cooling system 100 is configured to cool internal combustion engine 102. Cooling circuit portion 104 is configured to supply and return coolant, such as water, to the remaining cooling circuit. Charge air cooler 106 is configured to cool charge air by transferring heat from charge air to the coolant. Cylinder cooling jacket 108 is configured to cool cylinder unit 114 by transferring heat produced during operation of internal combustion engine 102 from cylinder unit 114 to the coolant. Charge air cooler piping 110 is configured to connect charge air cooler 106 to cylinder cooling jacket 108. Cylinder cooling jacket piping 112 is configured to connect cylinder cooling jacket 108 to cooling circuit portion 104. And cooling circuit portion connection piping 113 is configured to connect cooling circuit portion 104 to charge air cooler 106, thereby closing the cooling circuit.

Cooling circuit portion 104 includes cooling circuit portion piping 116, a cooling circuit portion outlet 118, and a cooling circuit portion inlet 120. Cooling circuit portion piping 116 may be arranged at a distance from internal combustion engine 102. For example, cooling circuit portion piping 116 may be arranged in a power plant, such as a combined heat and power plant, utilizing internal combustion engine 102 to provide thermal power and/or electric power. Cooling circuit portion piping 116 includes a fixed geometry and a fixed position in the power plant depending on the type and size of the power plant. Cooling circuit portion outlet 118 and cooling circuit portion inlet 120 may be disposed in the vicinity of internal combustion engine 102 supplying and returning coolant to the cooling circuit. Cooling circuit portion inlet 120 and cooling circuit portion outlet 118 have a fixed geometry and fixed position in the power plant depending on the type and size of the power plant.

Coolant exits cooling circuit portion piping 116 at cooling circuit portion outlet 118 for circulation through cooling circuit portion connection piping 113, charge air cooler piping 110, cylinder cooling jacket piping 112, charge air cooler 106, and cylinder cooling jacket 108, and returns to cooling circuit portion piping 116 via cooling circuit portion inlet 120, thereby circulating in the cooling circuit.

Cooling circuit portion 104 forms part of a secondary heating circuit 105, such as a district heating circuit. Cooling circuit portion 104 is in connection with secondary heating circuit 105 via a heat extraction system 122 disposed in cooling circuit portion piping 116. Heat extraction system 122 is configured to extract heat from the coolant and transfer that heat to secondary heating circuit 105 for either discharging the heat to the environment or recovering the heat for other applications, such as for heating applications, depending on the type and size of the power plant.

For example, if the power plant is a combined heat and power plant, the heat of the coolant is transferred to secondary heating circuit 105 via heat extraction system 122 for heating other components of the power plant. In those applications, heat extraction system 122, may be a heat recovery system 122 configured to recover heat of the coolant, for example, to provide hot water for heating applications.

In other power plants, heat of the coolant may be discharged into the environment. This may be the case, for example, if the power plant is used in hot areas where no heating is required. In those applications, heat extraction system 122 may be a heat discharge system 122 configured to discharge heat into the environment, for example, via a convection cooling. Heat discharge system 122 may, therefore, include one or more radiators having a large heat transfer area for efficiently transferring heat of the coolant to the atmosphere.

As secondary heating circuit 105 is, for example, a district heating circuit of a power plant or a communal heating circuit, secondary heating circuit 105 may include a wide range of coolant temperatures at a coolant return port of heat extraction system 122. The range of temperatures may be between, for example, about 45°C and about 75°C. As a consequence, the coolant temperature at the coolant circuit portion outlet 118 may also cover a wide range of temperatures, depending on the coolant temperature of secondary heating circuit 105. Thus, the coolant temperature at cooling circuit portion outlet 118 may be in a range between, for example, about 60°C and about 80°C.

Referring again to Fig. 1, charge air cooler 106 is configured to cool a flow of charge air admitted to charge air cooler 106 and transfer heat of the charge air to the coolant circulating in the cooling circuit. For example, charge air cooler 106 may cool a flow of charge air from a temperature of 260°C to a temperature of 45°C.

Charge air cooler 106 includes a cooling stage 124 with a top side 126 and a bottom side 128 opposite top side 126. Top and bottom sides 126, 128 together define a charge air passageway configured to guide charge air through charge air cooler 106, indicated by the arrow. Cooling stage 124 further includes a series of heat exchanging tubes (not shown) protruding at least partially into the charge air passageway. The heat exchanging tubes are configured to transfer heat from the charge air to the coolant by coolant running through the tubes and charge air flowing over the tubes. The heat exchanging tubes may be any type of heat exchanging tubes known to the person skilled in the art. The heat exchanging tubes may have any size, shape, length, geometry suitable for transferring heat from the charge air to the coolant. The heat exchanging tubes may be arranged in any layout with any center-to-center distance between adjoining tubes, and may have any outer surface and any inner surface suitable to efficiently transfer heat from the charge air to the coolant.

Charge air cooler 106 further includes a first charge air cooler port 130 and a second charge air cooler port 132. Depending on the type and design of charge air cooler 106, first charge air cooler port 130 is disposed on bottom side 128 and second charge air cooler port 132 is disposed on top side 126. In some embodiments, this may however not be the case. In some embodiments, as exemplarily shown in Fig. 1, first charge air cooler port 130 includes a first charge air cooler inlet 134 and a first charge air cooler outlet 136. Likewise, in some embodiments, as exemplarily shown in Fig. 1, second charge air cooler port 132 includes a second charge air cooler inlet 138 and a second charge air cooler outlet 140. First and second charge air cooler outlets 136, 140 are disposed downstream of first and second charge air cooler inlets 134, 138 with respect to a flow direction of charge air indicated by the arrow. In some embodiments, first and second charge air cooler outlets 136, 140 may be disposed upstream of first and second charge air cooler inlets 134, 138 with respect to the flow direction of charge air. In some embodiments, first and second charge air cooler outlets 136, 140 and first and second charge air cooler inlets 134, 138 may adjoin one another. In some embodiments, first and second charge air cooler outlets 136, 140 as well as first and second charge air cooler inlets 134, 138 may each have the same connection geometry, the same size, the same height, etc. In some embodiments, first and second charge air cooler outlets 136, 140 may be disposed symmetric to first and second charge air cooler inlets 134, 138 with respect to a plane extending perpendicular to the flow direction of charge air indicated by the arrow. In some embodiments, first and second charge air cooler ports 130, 132 may also be symmetric to a mid-plane between top side 126 and bottom side 128 extending along the flow direction of charge air. Thus, in some embodiments, charge air cooler 106 may, in principle, by rotated upside-down and still retain its connection geometry.

In some embodiments, charge air cooler 106 may be a two-stage charge air cooler 106 where cooling stage 124 as a first cooling stage configured to cool hot charge air from temperatures of, for example, 260°C to about 75°C, and a second cooling stage 142 configured to cool the charge air further, for example, from about 75°C to about 45°C. First cooling stage 124 may, therefore, constitute a high-temperature charge air cooling stage 124 and second cooling stage 142 may constitute a low-temperature charge air cooling stage 142. High- and low-temperature charge air cooling stages 124, 142 may form a compact unit, as indicated by the dashed-dotted box. Moreover, low-temperature charge air cooling stage 142 may have the same connection layout and the same connection geometry as high-temperature charge air cooling stage 124. Thus, in principle, also a rotation around a mid-plane between high- and low-temperature charge air cooling stages 124, 142 extending perpendicular to the flow direction of charge air may retain the connection geometry of charge air cooler 106.

In some embodiments, a heat transfer performance defined, for example, by a number of rows of heat exchanging tubes, of high-temperature charge air cooling stage 124 may be different to the heat transfer performance of low-temperature charge air cooling stage 142. Thus, by a rotation of the two-stage charge air cooler, as explained, also the heat transfer from the charge air to the coolant may change. A rotation of the two-stage charge air cooler may, therefore, allow for a higher flexibility in cooling internal combustion engine 102.

Low-temperature charge air cooling stage 142 may further be connected to a low-temperature cooling circuit 144 including a low-temperature heat extraction system 146, for extracting heat transferred from the charge air to a coolant, such as water, circulating in low-temperature cooling circuit 144.

Cylinder cooling jacket 108 is configured to transfer heat produced in cylinder unit 114 to the coolant circulating in the cooling circuit. Cylinder cooling jacket 108 may be a jacket cooler produced by a series of holes, channels, or bores - either cast, milled, or drilled - for cooling the cylinder, cylinder liner, cylinder head, and other components of cylinder unit 114. Cylinder cooling jacket 108 includes a cylinder cooling jacket inlet 148 configured to admit the coolant to cylinder unit 114, and a cylinder cooling jacket outlet 150 for discharging the coolant. Cylinder cooling jacket 108 requires the coolant to have a narrow temperature range from, for example, about 75°C to about 95°C between cylinder cooling jacket inlet 148 and cylinder cooling jacket outlet 150 for efficiently cooling cylinder unit 114. Cylinder cooling jacket inlet and outlet 148, 150 further define a fixed flow direction of coolant within cylinder unit 114 from cylinder cooling jacket inlet 148 to cylinder cooling jacket outlet 150. Cylinder cooling jacket inlet and outlet 148, 150 have a fixed position within internal combustion engine 102 due to spatial requirements within internal combustion engine 102. Cylinder cooling jacket inlet and outlet 148, 150 may further have identical connection geometry, but not necessarily.

Referring again to cooling circuit portion 104, exemplarily the coolant is shown to have a coolant outlet temperature at cooling circuit portion outlet 118 of about 60°C. Such a coolant outlet temperature corresponds, for example, to a combined heat and power plant where the coolant of secondary heating circuit 105 has a temperature of, for example, 50°C at the coolant return port of heat extraction system 122. In cases where the coolant outlet temperature at cooling circuit portion outlet 118 is around 60°C, the coolant may still be able to increase its temperature and still not violate the narrow temperature range requirement defined by cylinder cooling jacket 108. In other words, when the coolant exits cooling circuit portion outlet 118 at a temperature of about 60°C, the coolant may increase its temperature by cooling charge air in charge air cooler 106, and still have a coolant temperature close to the required cylinder cooling jacket inlet temperature. For example, the coolant temperature may be about 80°C upon entering cylinder cooling jacket inlet 148, as indicated in Fig. 1.

Thus, the cooling system 100 is configured in the first cooling configuration, as exemplarily shown in Fig. 1, such that coolant supplied by cooling circuit portion outlet 118 first passes charge air cooler 106 and then cylinder cooling jacket 108.

In more detail, in the first cooling configuration, cooling circuit portion outlet 118 is connected to first charge air cooler port 130 via cooling circuit portion connection piping 113. In embodiments where first charge air cooler port 130 includes first charge air cooler inlet and outlet 134, 136, as illustrated in Fig. 1, cooling circuit portion outlet 118 is connected to first charge air cooler inlet 134. The coolant then passes charge air cooler 106 and exits charge air cooler 106 at second charge air cooler outlet 140. During the process of heat transfer from charge air to the coolant, the coolant may increase its temperature, for example, from about 60°C to about 80°C.

Charge air cooler 106 is connected to cylinder cooling jacket 108 via charge air cooler piping 110. Charge air cooler piping 110 includes a first charge air cooler piping element 152, a second charge air cooler piping element 154, and a third charge air cooler piping element 156. First charge air cooler piping element 152 is connected to second charge air cooler piping element 154 via a first charge air cooler connection portion 158. Second charge air cooler piping element 154 is connected to third charge air cooler piping element 156 via a second charge air cooler connection portion 160. First and second charge air cooler connection portions 158, 160 may include flanges welded or soldered onto first, second, and third charge air cooler piping elements 152, 154, 156, or may include pipe couplings, pipe fittings, etc., screwed, soldered, welded, press-fitted onto first, second, and third charge air cooler piping elements 152, 154, 156. First and second charge air cooler connection portions 158, 160 may further include any type of sealing, such as a gasket sealing, an O-ring sealing or the like. First, second, and third charge air cooler piping elements 152, 154, 156 may further be non-detachably connected to each other at first and second charge air cooler connection portions 158, 160, respectively, via welding, soldering, riveting, glueing, etc., or may be detachably connected to each other via screws, bolts, clamps, pipe-in-pipe connections, etc. Moreover, first and second charge air cooler connection portions 158, 160 may be non-detachably connected to internal combustion engine 102, for example, welded, soldered glued, etc. or may be detachably connected to internal combustion engine 102 via flanges, webs or the like.

As can be seen in Fig. 1, first charge air cooler piping element 152 is connected to second charge air cooler port 132 and to first charge air cooler connection portion 158. In embodiments where second charge air cooler port 132 includes second charge air cooler inlet and outlet 138, 140, as illustrated in Fig. 1, first charge air cooler piping element 152 is connected to second charge air cooler outlet 140 and to first charge air cooler connection portion 158. Second charge air cooler piping element 154 is connected to first charge air cooler connection portion 158 and to second charge air cooler connection portion 160. And third charge air cooler piping element 156 is connected to second charge air cooler connection portion 160 and to cylinder cooling jacket inlet 148.

Coolant than passes cylinder cooling jacket 108 by flowing through cylinder cooling jacket 108 from cylinder cooling jacket inlet 148 to cylinder cooling jacket outlet 150, removing heat from cylinder unit 114, thereby increasing the coolant temperature, for example, from about 80°C to about 90°C.

Cylinder cooling jacket 108 is connected to cooling circuit portion 104 via cylinder cooling jacket piping 112. Cylinder cooling jacket piping 112 includes a first cylinder cooling jacket piping element 162, a second cylinder cooling jacket piping element 164, and a third cylinder cooling jacket piping element 166. First cylinder cooling jacket piping element 162 is connected to second cylinder cooling jacket piping element 164 via a first cylinder cooling jacket connection portion 168. Second cylinder cooling jacket piping element 164 is connected to third cylinder cooling jacket piping element 166 via a second cylinder cooling jacket connection portion 170. First and second cylinder cooling jacket connection portions 168, 170 may include the same shapes, geometries, connection means, etc., as first and second charge air cooler connection portions 158, 160, or more generally may be identical to first and second charge air cooler connection portions 158, 160. In some embodiments, first and second cylinder cooling jacket connection portions 168, 170 may be different to first and second charge air cooler connection portions 158, 160. Moreover, first and second cylinder cooling jacket connection portions 168, 170 may be detachably or non-detachably connected to internal combustion engine 102 via flanges, webs or the like.

As can be seen in Fig. 1, first cylinder cooling jacket piping element 162 is connected to cylinder cooling jacket outlet 150 and to first cylinder cooling jacket connection portion 168. Second cylinder cooling jacket piping element 164 is connected to first cylinder cooling jacket connection portion 168 and to second cylinder cooling jacket connection portion 170. And third cylinder cooling jacket piping element 166 is connected to second cylinder cooling jacket connection portion 170 and to cooling circuit portion inlet 120, thereby closing the cooling circuit.

Third charge air cooler piping element 156 and first cylinder cooling jacket piping element 162 may be separate pipes or may be a direct-pipe unit 200, as indicated by the dashed-dotted box. Direct-pipe unit 200 may include third charge air cooler piping element 156 and first cylinder cooling jacket piping element 162 welded to one another, or cast to shape. Direct-pipe unit 200 may further include a first common flange for connecting to second charge air cooler connection portion 160 and to first cylinder cooling jacket connection portion 168, and may include a second common flange for connecting to cylinder cooling jacket inlet 148 and to cylinder cooling jacket outlet 150. In some embodiments, direct-pipe unit 200 may include one common flange on one side and two separate flanges on the other side.

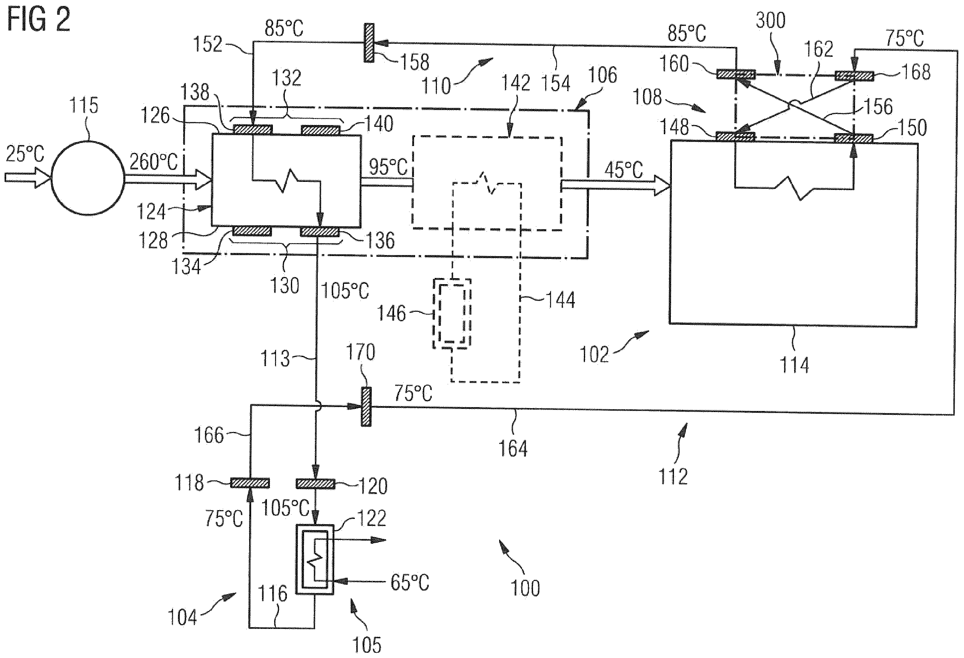

Referring now to Fig. 2, an exemplary embodiment of cooling system 100 is schematically shown, wherein cooling system 100 is configured in a second cooling configuration. Elements already explained in connection with Fig. 1 have the same reference numerals.

Exemplarily the coolant is shown to have a coolant outlet temperature at cooling circuit portion outlet 118 of about 75°C. Such coolant outlet temperatures correspond, for example, to power plants in hot areas where no heating applications are required and the coolant circulating in secondary heating circuit 105 has a coolant temperature at the coolant return port of heat extraction system 122 of, for example, 65°C, as indicated in Fig. 2. In cases where the coolant outlet temperature at cooling circuit portion outlet 118 is around 75°C, the coolant may not be utilized for removing heat from hot charge air prior to entering cylinder cooling jacket 108 without violating the narrow temperature range restriction of cylinder cooling jacket 108. In other words, if the coolant were to remove heat from hot charge air prior to entering cylinder cooling jacket 108 - as in the first cooling configuration shown in Fig. 1 - the heated coolant would have a coolant temperature exceeding the required cylinder cooling jacket inlet temperature. Hence, cylinder unit 114 might not be efficiently cooled, and, as a result, internal combustion engine 102 might produce a larger amount of exhaust emissions or would require more fuel to provide a desired power output.

Thus, the cooling system 100 is configured in the second cooling configuration, as exemplarily shown in Fig. 2, such that coolant supplied by cooling circuit portion outlet 118 first passes cylinder cooling jacket 102 and then charge air cooler 106.

In more detail, in the second cooling configuration, cooling circuit portion outlet 118 is connected to second cylinder cooling jacket connection portion 170 via third cylinder cooling jacket piping element 166. Second cylinder cooling jacket piping element 164 is connected to second cylinder cooling jacket connection portion 170 and to first cylinder cooling jacket connection portion 168. And first cylinder cooling jacket piping element 162 is connected to first cylinder cooling jacket connection portion 168 and to cylinder cooling jacket inlet 148. As a consequence, coolant having a coolant outlet temperature at cooling circuit portion outlet 118 of about 75°C enters cylinder cooling jacket 108 at the required cylinder cooling jacket inlet temperature. In cylinder cooling jacket 108 coolant then removes heat from cylinder cooling jacket 108, thereby increasing the coolant temperature, for example, from about 75°C to about 85°C.

Cylinder cooling jacket outlet 150 is then connected to second charge air cooler connection portion 160 via third charge air cooler piping element 156. Second charge air cooler piping element 154 is connected to second charge air cooler connection portion 160 and to first charge air cooler connection portion 158. And first charge air cooler piping element 152 is connected to first charge air cooler connection portion 158 and to second charge air cooler port 132. In embodiments where second charge air cooler port 132 includes second charge air cooler inlet and outlet 138, 140, as illustrated in Fig. 1, first charge air cooler piping element 152 is connected to first charge air cooler connection portion 158 and to second charge air cooler inlet 138. The coolant then passes charge air cooler 106, thereby removing heat from the hot charge air and increasing the coolant temperature, for example, from about 85°C to about 105°C. During the process of heat removal, the temperature of charge air may be reduced from, for example, about 260°C to about 95°C.

First charge air cooler port 130 is then connected to cooling circuit portion inlet 120 via cooling circuit portion connection piping 113, thereby closing the cooling circuit. In embodiments where first charge air cooler port 130 includes first charge air cooler inlet and outlet 134, 136, as illustrated in Fig. 1, first charge air cooler outlet 136 is connected to cooling circuit portion inlet 120 via cooling circuit portion connection piping 113.

Thus, between first and second cooling configurations, a flow direction of coolant within cylinder cooling jacket 108 is maintained, whereas the flow direction in charge air cooler 106 is reversed.

First and second charge air cooler piping elements 152, 154, second and third cylinder cooling jacket piping elements 164, 166, cooling circuit portion piping 116 and cooling circuit portion connection piping 113 may be rigid piping made from, for example, steel or iron, or may be flexible piping made from, for example, temperature-resistant plastics or layers of plastic and steel. The piping may be detachably or non-detachably connected to internal combustion engine 102 using appropriate connection means such as welding, soldering, clamps, screws, bolts, or the like.

Moreover, as can be seen in Fig. 2, by directing coolant first to cylinder cooling jacket 108 and then to charge air cooler 106 while maintaining the fixed flow direction in cylinder cooling jacket 108, first cylinder cooling jacket piping element 162 and third charge air cooler piping element 156 are arranged in a cross-like flow configuration. First cylinder cooling jacket piping element 162 and third charge air cooler piping element 156 may, again, be separate pipes or may be integrally formed as a cross-pipe unit 300, as indicated by the dashed-dotted box.

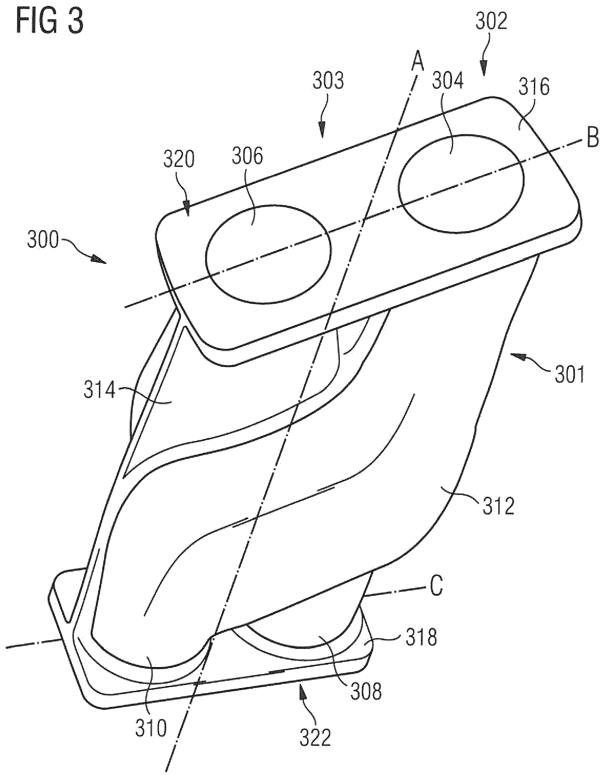

Fig. 3 shows an exemplary embodiment of such a cross-pipe unit 300 combining first cylinder cooling jacket piping element 162 and third charge air cooler piping element 156 in a cross-like flow configuration.

Cross-pipe unit 300 includes a main body 301 extending along a longitudinal axis A separating main body 301 into a first portion 302 and a second portion 303. Main body 301 includes a cross-pipe unit top side 320 having a first opening 304 and a second opening 306, and a cross-pipe unit bottom side 322 opposite cross-pipe unit top side 320 having a third opening 308 and a fourth opening 310. First opening 304 and third opening 308 are disposed in the first portion 302, second opening 306 and fourth opening 310 are disposed in the second portion 303. Cross-pipe unit 300 further includes a first channel 312 connecting first opening 304 to third opening 310, and a second channel 314 connecting second opening 306 to fourth opening 308. As first opening 304 is disposed in first portion 302 and fourth opening 310 is disposed in the second portion 303 with respect to longitudinal axis A, first channel 312 connecting first opening 304 to fourth opening 310 directs a flow of fluid from first portion 302 to second portion 306. Likewise, as second opening 306 is disposed in second portion 303 and third opening 308 is disposed in the first portion 302 with respect to longitudinal axis A, second channel 314 connecting second opening 306 to fourth opening 308 directs a flow of fluid from second portion 303 to first portion 302, thereby arriving at a cross-like flow configuration between first channel 312 and second channel 314.

First to fourth openings 304, 306, 308, 310 include a circular cross-section. In some embodiments, first to fourth openings 304, 306, 308, 310 may include non-circular cross-sections, such as oval, rectangular cross-sections, etc. First opening 304 and second opening 306 are disposed along a first common axis B. Likewise, third opening 308 and fourth opening 310 are disposed along a second common axis C. First and second common axes B, C are disposed in a common plane extending along longitudinal axis A and including longitudinal axis A. In some embodiments, first and second common axes B, C may not be disposed in the common plane extending along longitudinal axis A and including longitudinal axis A.

Cross-pipe unit 300 further includes a first flange 316 formed on cross-pipe unit top side 320 and a second flange 318 formed on cross-pipe unit bottom side 322. First opening 304 and second opening 306 are disposed in first flange 316. Third opening 308 and fourth opening 310 are disposed in second flange 318. First flange 316 is configured to connect to first cylinder cooling jacket connection portion 168 and to second charge air cooler connection portion 160, such that second cylinder cooling jacket piping element 164 is in fluid connection with first opening 304, and second charge air cooler piping element 154 is in fluid connection with second opening 306. Second flange 318 is configured to connect to cylinder cooling jacket outlet 150 and to cylinder cooling jacket inlet 148, such that cylinder cooling jacket outlet 150 is in fluid connection with third opening 308 and cylinder cooling jacket inlet 148 is in fluid connection with fourth opening 310. First flange 316 and second flange 318 include a rectangular shape. In some embodiments, first and second flanges 316, 318 may include circular shapes or oval shapes. First flange 316 may be connected detachably or non-detachably to second charge air cooler connection portion 160 and first cylinder cooling jacket connection portion 168 using appropriate connection means. And second flange 318 may be connected detachably or non-detachably to cylinder cooling jacket inlet 148 and cylinder cooling jacket outlet 150 using appropriate connection means. First flange 316 extends non-parallel to second flange 318. In some embodiments, first and second flanges 316, 318 may be parallel to one another.

Cross-pipe unit 300 may further include other features not shown, for example, webs, flanges, etc. for connecting cross-pipe unit 300 to internal combustion engine 102. Cross-pipe unit 300 may be cast and may be made from rigid material, such as steel, iron or cast iron. In some embodiments, cross-pipe unit 300 may be made from flexible material, such as temperature-resistant plastics or layers of plastic and steel.

### Industrial Applicability

Exemplary internal combustion engines suited to the disclosed cooling system are internal combustion engines of any type, such as those manufactured by Caterpillar Motoren GmbH & Co. KG, Kiel, Germany. Respective internal combustion engines may be operated at speeds of 400 - 1200 rpm and may be applied, for example, in landbased power generator sets. One skilled in the art will however appreciate that the disclosed cooling system may also be adapted to suit other internal combustion engines.

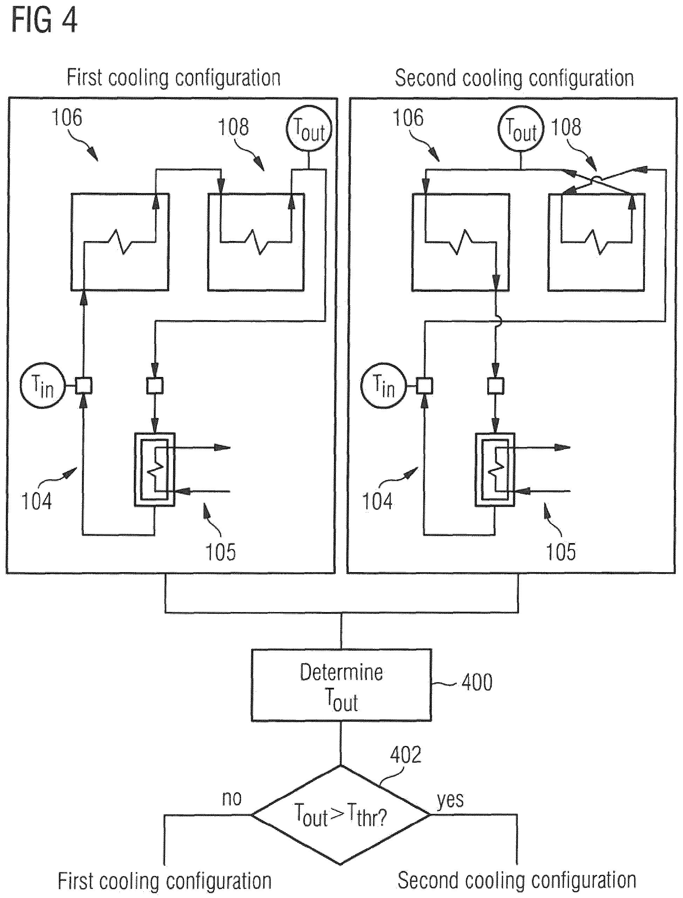

In the following, a strategy for configuring cooling system 100 as exemplarily disclosed herein is described with reference to Fig. 1 to 3 in connection with Fig. 4. For illustration purposes, the strategy is described with reference to structural elements disclosed in Figs. 1 to 3. However, a skilled person will appreciate that the respective steps of the strategy can be performed on other embodiments as well.

Fig. 4 shows a schematic flow diagram of an exemplary strategy for configuring cooling system 100 for internal combustion engine 102. At step 400, in both cooling configurations a coolant outlet temperature Tₒᵤₜ is determined at cylinder cooling jacket outlet 150 or, as indicated in Fig. 4, downstream of cylinder cooling jacket outlet 150 with respect to the flow direction of the coolant. For example, a temperature sensor is disposed at cylinder cooling jacket outlet 150 or downstream of cylinder cooling jacket outlet 150 and configured to sense a temperature of the coolant. Thus, at step 400 both cooling configurations are tested and a first coolant outlet temperature in the first cooling configuration during operation of internal combustion engine 102 is determined. And a second coolant outlet temperature in the second cooling configuration during operation of internal combustion engine is determined. Alternatively, just one coolant outlet temperature is determined.

At step 402, it is determined whether the coolant outlet temperature Tₒᵤₜ exceeds a threshold outlet temperature Tₜₕᵣ. Threshold outlet temperature Tₜₕᵣ may be, for example, about 92°C and corresponds to a coolant temperature at which internal combustion engine 102 is able to provide its full range of desired power outputs. That means, at step 402, it is determined whether the first coolant outlet temperature exceeds a first threshold outlet temperature. And it is determined whether the second coolant outlet temperature exceeds a second threshold outlet temperature. The first and second threshold outlet temperatures are identical to threshold outlet temperature Tₜₕᵣ. In some embodiments, the first and second threshold outlet temperatures may be different from Tₜₕᵣ and/or may be non-equal to one another.

If at step 402 it is determined, that the second coolant outlet temperature does not exceed the second threshold outlet temperature, cooling system 100 is then configured in the first cooling configuration, as exemplarily shown in Fig. 1 and illustrated on the left-hand side of Fig. 4. That means, charge air cooler 106 and cylinder cooling jacket 108 are connected to cooling circuit portion 104 such that the flow of coolant first enters charge air cooler 106 and then passes cylinder cooling jacket 108. The coolant then leaves cylinder cooling jacket 108 and returns to cooling circuit portion 104, thereby closing the cooling circuit.

By configuring cooling system 100 in the first cooling configuration, the coolant first extracts heat from hot charge air and then from cylinder unit 114. Thus, upon entering charge air cooler 106, the coolant temperature is low, and, therewith, a heat transfer between the cold coolant and the hot charge air is high. As a consequence, by using the first cooling configuration, a high thermal efficiency may be achieved. The first cooling configuration may be chosen, for example, in combined heat and power plants, where the heat of the coolant is recovered for heating applications or the like.

If it is determined at step 402 that the first coolant outlet temperature exceeds the first threshold outlet temperature, cooling system 100 is then configured in the second cooling configuration, as exemplarily shown in Fig. 2 and illustrated on the right-hand side of Fig. 4. That means, charge air cooler 106 and cylinder cooling jacket 108 are connected to cooling circuit portion 104 such that the flow of coolant first enters cylinder cooling jacket 108 and then charge air cooler 106. The coolant then leaves charge air cooler 106 and returns to cooling circuit portion 104, thereby closing the cooling circuit. By configuring cooling system 100 in the second cooling configuration, the coolant first extracts heat from cylinder unit 114, thereby ensuring that the coolant inlet temperature at cylinder cooling jacket inlet 148 is within the narrow temperature range required by cylinder cooling jacket 108. Once the coolant leaves cylinder cooling jacket 108, the flow of coolant than enters charge air cooler 106, thereby cooling hot charge air. During the process of cooling the coolant temperature may increase, for example, from temperatures of about 90°C at cylinder cooling jacket outlet 150 to about 105°C at second charge air cooler port 132. As a consequence, by using the second cooling configuration, a coolant temperature at heat recovery system 122 may be increased, for example, from about 90°C in the first cooling configuration to about 105°C in the second cooling configuration. When heat is discharged into the environment, for example, by convection cooling via radiators or table coolers, the increased coolant temperature may result in an increased temperature difference to the ambient air and, therefore, a heat transfer area for transferring heat of the coolant to the ambient air may be reduced. Thus, the second cooling configuration may be chosen, for example, in power plants located in hot areas, where the heat of the coolant is not used for heating purposes but discharged into the environment.

In other words: In the first cooling configuration, cooling system 100 is configured such that charge air cooler 106 is arranged upstream of cylinder cooling jacket 108 with respect to the flow direction of coolant defined by the flow of coolant from cooling circuit portion inlet 120 to coolant circuit portion outlet 118. And, in the second cooling configuration, cooling system 100 is configured such that charge air cooler 106 is arranged downstream of cylinder cooling jacket 108 with respect to the same flow direction of coolant.

By first testing each cooling configuration with respect to an achieved coolant outlet temperature Tₒᵤₜ and then configuring cooling system 100 in its first or second cooling configuration depending on the result determined at step 402, it is ensured that the the narrow temperature range restriction of cylinder cooling jacket 108 is not violated. Thus, by following the described strategy, a preferred cooling configuration for internal combustion engine 102 may be chosen. The described cooling strategy may be also applicable, for example, for coolant inlet temperatures Tᵢₙ at cooling circuit portion outlet 118 in a range from, for example, about 70°C to about 80°C or coolant inlet temperatures Tᵢₙ at the coolant return port of heat extraction system 122 in a range from, for example, about 60°C to about 70°C , where a desired operation of internal combustion engine 102 may depend on the chosen cooling configuration.

Moreover, by connecting cooling circuit portion 104 to charge air cooler 106 and to cylinder cooling jacket 108 in a way as schematically shown in Fig. 1 and 2, both cooling configurations may be configured using a minimized amount of costs and a minimized amount of effort. That means, in both cooling configurations cooling circuit portion 104, cooling circuit portion outlet 118, cooling circuit portion inlet 120, second charge air cooler piping element 154, and second cylinder cooling jacket piping element 164 are utilized in both configurations. Thus, there is no need to change those components, and those components may remain fixed within cooling system 100 for any of the cooling configurations. Also, in the first cooling configuration direct-pipe unit 200 is utilized and in the second cooling configuration cross-pipe unit 300 is utilized. By exchaning direct-pipe unit 200 with cross-pipe unit 300, the first cooling configuration is changed into the second cooling configuration using a minimized amount of costs and a minimized amount of effort. The proposed cooling system 100 may, therefore, be adapted to the application at hand at a minimized amount of components to be exhchanged.

Furthermore, as the flow direction of coolant within cylinder cooling jacket 108 remains fixed independent of the cooling configuration, no changes to cylinder cooling jacket 108 may be required in any of the cooling configurations.

The herein described cooling system and strategy for configuring a cooling system for an internal combustion engine may be applicable to any internal combustion engine operating in electric power generation plants and/or combined heat and power generation plants located in hot and cold areas.

Although the preferred embodiments of this invention have been described herein, improvements and modifications may be incorporated without departing from the scope of the following claims.

## Claims

1. A cooling system (100) for an internal combustion engine (102) including a cylinder unit (114), the cooling system (100) comprising:
a cooling circuit portion (104) configured to circulate a flow of coolant, the cooling circuit portion (104) including a cooling circuit portion outlet (118) and a cooling circuit portion inlet (120), the cooling circuit portion outlet (118) and the cooling circuit portion inlet (120) defining a flow direction of coolant within the cooling circuit portion (104) from the cooling circuit portion inlet (120) to the cooling circuit portion outlet (118);
a charge air cooler (106) configured to transfer heat from charge air to the coolant, the charge air cooler (106) including a first charge air cooler port (130), and a second charge air cooler port (132); and
a cylinder cooling jacket (108) configured to transfer heat from the cylinder unit (114) to the coolant, the cylinder cooling jacket (108) including a cylinder cooling jacket inlet (148), and a cylinder cooling jacket outlet (150), **characterised in that**,
in a first cooling configuration, the cooling circuit portion outlet (118) is connected to the first charge air cooler port (130), the second charge air cooler port (132) is connected to the cylinder cooling jacket inlet (148), and the cylinder cooling jacket outlet (150) is connected to the cooling circuit portion inlet (120), and wherein,
in a second cooling configuration, the cooling circuit portion outlet (118) is connected to the cylinder cooling jacket inlet (148), the cylinder cooling jacket outlet (150) is connected to the second charge air cooler port (132) and the first charge air cooler port (130) is connected to the cooling circuit portion inlet (120).

2. The cooling system (100) according to claim 1, wherein the cooling circuit portion (104) is connected to the cylinder cooling jacket (106) via a cylinder cooling jacket piping (112), the cylinder cooling jacket piping (112) including a first cylinder cooling jacket piping element (162), a second cylinder cooling jacket piping element (164) connected to the first cylinder cooling jacket piping element (162) via a first cylinder cooling jacket connection portion (168), and a third cylinder cooling jacket piping element (166) connected to the second cylinder cooling jacket piping element (164) via a second cylinder cooling jacket connection portion (170), wherein,
in the first cooling configuration, the first cylinder cooling jacket piping element (162) is configured to connect the cylinder cooling jacket outlet (150) to the first cylinder cooling jacket connection portion (168), the second cylinder cooling jacket piping element (164) is configured to connect the first cylinder cooling jacket connection portion (168) to the second cylinder cooling jacket connection portion (170), and the third cylinder cooling jacket piping element (166) is configured to connect the second cylinder cooling jacket connection portion (170) to the cooling circuit portion inlet (120), and wherein,
in the second cooling configuration, the first cylinder cooling jacket piping element (162) is configured to connect the cylinder cooling jacket inlet (148) to the first cylinder cooling jacket connection portion (168), the second cylinder cooling jacket piping element (164) is configured to connect the first cylinder cooling jacket connection portion (168) to the second cylinder cooling jacket connection portion (170), and the third cylinder cooling jacket piping element (166) is configured to connect the second cylinder cooling jacket connection portion (170) to the cooling circuit portion outlet (118).

3. The cooling system (100) according to claim 2, wherein the charge air cooler (106) is connected to the cylinder cooling jacket (108) via a charge air cooler piping (110), the charge air cooler piping (110) including a first charge air cooler piping element (152), a second charge air cooler piping element (154) connected to the first charge air cooler piping element (152) via a first charge air cooler connection portion (158), and a third charge air cooler piping element (156) connected to the second charge air cooler piping element (154) via a second charge air cooler connection portion (160), wherein
in the first cooling configuration, the first charge air cooler piping element (152) is configured to connect the second charge air cooler port (132) to the first charge air cooler connection portion (158), the second charge air cooler piping element (154) is configured to connect the first charge air cooler connection portion (158) to the second charge air cooler connection portion (160), and the third charge air cooler piping element (156) is configured to connect the second charge air cooler connection portion (160) to the cylinder cooling jacket inlet (148), and wherein,
in the second cooling configuration, the first charge air cooler piping element (152) is configured to connect the second charge air cooler port (132) to the first charge air cooler connection portion (158), the second charge air cooler piping element (154) is configured to connect the first charge air cooler connection portion (158) to the second charge air cooler connection portion (160), and the third charge air cooler piping element (156) is configured to connect the second charge air cooler connection portion (160) to the cylinder cooling jacket outlet (150).

4. The cooling system (100) according to claim 3, wherein, in the second cooling configuration, the third charge air cooler piping element (156) and the first cylinder cooling jacket piping element (162) are integrally formed as a cross-pipe unit (300), the cross-pipe unit (300) being configured to connect the cylinder cooling jacket inlet (148) to the first cylinder cooling jacket connection portion (168), and the cylinder cooling jacket outlet (150) to the second charge air cooler connection portion (160).

5. The cooling system (100) according to any one of the preceding claims, wherein the cooling circuit portion (104), the cooling circuit portion inlet (120), and the cooling circuit portion outlet (118) have the same fixed geometry and the same fixed position within the cooling system (100) for the first cooling configuration and the second cooling configuration, and wherein the flow direction of coolant within the cooling circuit portion (104) is the same for the first cooling configuration and the second cooling configuration.

6. The cooling system (100) according to any one of the preceding claims, wherein the charge air cooler (106) includes a bottom side (128) and a top side (126) opposite the bottom side (128), the bottom side (128) including the first charge air cooler port (130) and the top side (126) including the second charge air cooler port (132), the first charge air cooler port (130) including a first charge air cooler inlet (134) and a first charge air cooler outlet (136), the second charge air cooler port (132) including a second charge air cooler inlet (138) and a second charge air cooler outlet (140), wherein,
in the first cooling configuration, the cooling circuit portion outlet (118) is connected to the first charge air cooler inlet (134) and the second charge air cooler outlet (140) is connected to the cylinder cooling jacket inlet (148), and wherein,
in the second cooling configuration, the cooling circuit portion inlet (120) is connected to the first charge air cooler outlet (136) and the second charge air cooler inlet (138) is connected to the cylinder cooling jacket outlet (150).

7. The cooling system (100) according to any one of the preceding claims, wherein the charge air cooler (106) is a two-stage charge air cooler (106) including a high-temperature charge air cooling stage (124) and a low-temperature charge air cooling stage (142), wherein the cylinder cooling jacket (108) and the cooling circuit portion (104) are connected to the high-temperature charge air cooling stage (124) in the first and the second cooling configuration.

8. The cooling system (100) according to claim 7, wherein the cooling system (100) further comprises a low-temperature cooling circuit (144) connected to the low-temperature charge air cooling stage (142),

9. The cooling system (100) according to any one of the preceding claims, wherein the cooling system (100) further comprises a heat extraction system (122) connected to the cooling circuit portion (104) and configured to extract heat from the coolant.

10. The cooling system (100) according to claim 9, wherein,
in the first cooling configuration, the heat extraction system (122) is a heat recovery system (122) configured to recover heat from the coolant, and wherein,
in the second cooling configuration, the heat extraction system (122) is a heat discharge system (122) configured to discharge heat of the coolant to the environment.

11. The cooling system (100) according to any one of the preceding claims, wherein a coolant outlet temperature at the cooling circuit portion outlet is equal to or below a threshold coolant outlet temperature in the first cooling configuration, and above the threshold coolant outlet temperature in the second cooling configuration, wherein the threshold coolant outlet temperature at the cooling circuit portion outlet (118) is in a range from about 70°C to about 80°C.

12. The cooling system (100) according to any one of the preceding claims, wherein a coolant outlet temperature at the cooling circuit portion outlet (118) is in a range from about 60°C to about 80°C, and a coolant inlet temperature at the cooling circuit portion inlet is in a range from about 90°C to about 105°C.

13. Use of a set of interchangeable pipe units for configuring a cooling system (100) of an internal combustion engine (102) in a first cooling configuration and in a second cooling configuration, the cooling system (100) including a charge air cooler piping (110) with a first charge air cooler connection portion (158) and a second charge air cooler connection portion (160), a cylinder cooling jacket (102) with a cylinder cooling jacket inlet (148) and a cylinder cooling jacket outlet (150), and a cylinder cooling jacket piping (112) with a first cylinder cooling jacket connection portion (168) and a second cylinder cooling jacket connection portion (170), the set of interchangeable pipe units including a direct-pipe unit (200) and a cross-pipe unit (300), wherein,
in the first cooling configuration, the direct-pipe unit (200) is configured to connect the second charge air cooler connection portion (160) to the cylinder cooling jacket inlet (148), and the cylinder cooling jacket outlet (150) to the first cylinder cooling jacket connection portion (168), and wherein,
in the second cooling configuration, the cross-pipe unit (300) is configured to connect the cylinder cooling jacket inlet (148) to the first cylinder cooling jacket connection portion (168), and the cylinder cooling jacket outlet (150) to the second charge air cooler connection portion (160),

14. An internal combustion engine (102), comprising:
a cylinder unit (114);
a turbocharger (115) configured to provide charge air to the cylinder unit (114); and
a cooling system (100) according to any one of the claims 1 to 12.

15. A method for configuring a cooling system (100) for an internal combustion engine (102), the cooling system (100) including a cooling circuit portion (104) having a cooling circuit portion outlet (118) and a cooling circuit portion inlet (120), a charge air cooler (106) having a first charge air cooler port (130) and a second charge air cooler port (132), and a cylinder cooling jacket (108) with a cylinder cooling jacket inlet (148) and a cylinder cooling jacket oulet (150), the cooling system (100) including a first cooling configuration, wherein the cooling circuit portion outlet (118) is connected to the first charge air cooler port (130), the second charge air cooler port (132) is connected to the cylinder cooling jacket inlet (148), and the cylinder cooling jacket outlet (150) is connected to the cooling circuit portion inlet (120), and a second cooling configuration, wherein the cooling circuit portion outlet (118) is connected to the cylinder cooling jacket inlet (148), the cylinder cooling jacket outlet (150) is connected to the second charge air cooler port (132) and the first charge air cooler port (130) is connected to the cooling circuit portion inlet (120), the method comprising:
determining a first coolant outlet temperature at the cylinder cooling jacket oulet (150) for the first cooling configuration;
determining a second coolant outlet temperature at the cylinder cooling jacket oulet (150) for the second cooling configuration;
configuring the cooling system (100) in the second cooling configuration if the first coolant outlet temperature exceeds a first threshold outlet temperature; and/or
configuring the cooling system (100) in the first cooling configuration if the second coolant outlet temperature does not exceed a second threshold outlet temperature.

## Patentansprüche

1. Kühlsystem (100) für eine Brennkraftmaschine (102) mit einer Zylindereinheit (114), wobei das Kühlsystem (100) umfasst:
einen Kühlkreislaufabschnitt (104), der dazu konfiguriert ist, einen Kühlmittelstrom umzuwälzen, wobei der Kühlkreislaufabschnitt (104) einen Kühlkreislaufabschnitt-Auslass (118) und einen Kühlkreislaufabschnitt-Einlass (120) einschließt, wobei der Kühlkreislaufabschnitt-Auslass (118) und der Kühlkreislaufabschnitt-Einlass (120) eine Strömungsrichtung des Kühlmittels innerhalb des Kühlkreislaufabschnitts (104) von dem Kühlkreislaufabschnitt-Einlass (120) zu dem Kühlkreislaufabschnitt-Auslass (118) definieren;
einen Ladeluftkühler (106), der dazu konfiguriert ist, Wärme von der Ladeluft auf das Kühlmittel zu übertragen, wobei der Ladeluftkühler (106) einen ersten Ladeluftkühler-Anschluss (130) und einen zweiten Ladeluftkühler-Anschluss (132) einschließt; und
einen Zylinderkühlmantel (108), der dazu konfiguriert ist, Wärme von der Zylindereinheit (114) auf das Kühlmittel zu übertragen, wobei der Zylinderkühlmantel (108) einen Zylinderkühlmantel-Einlass (148) und einen Zylinderkühlmantel-Auslass (150) einschließt, **dadurch gekennzeichnet, dass,**
in einer ersten Kühlkonfiguration der Kühlkreislaufabschnitt-Auslass (118) mit dem ersten Ladeluftkühler-Anschluss (130) verbunden ist, der zweite Ladeluftkühler-Anschluss (132) mit dem Zylinderkühlmantel-Einlass (148) verbunden ist und der Zylinderkühlmantel-Einlass (150) mit dem Kühlkreislaufabschnitt-Einlass (120) verbunden ist, und wobei,
in einer zweiten Kühlkonfiguration der Kühlkreislaufabschnitt-Auslass (118) mit dem Zylinderkühlmantel-Einlass (148) verbunden ist, der Zylinderkühlmantel-Auslass (150) mit dem zweiten Ladeluftkühler-Anschluss (132) verbunden ist und der erste Ladeluftkühler-Anschluss (130) mit dem Kühlkreislaufabschnitt-Einlass (120) verbunden ist.

2. Kühlsystem (100) nach Anspruch 1, wobei der Kühlkreislaufabschnitt (104) über eine Zylinderkühlmantel-Rohrleitung (112) mit dem Zylinderkühlmantel (106) verbunden ist, wobei die Zylinderkühlmantel-Rohrleitung (112) ein erstes Zylinderkühlmantel-Rohrleitungselement (162), ein zweites Zylinderkühlmantel-Rohrleitungselement (164), das mit dem ersten Zylinderkühlmantel-Rohrleitungselement (162) über einen ersten Zylinderkühlmantel-Verbindungsabschnitt (168) verbunden ist, und ein drittes Zylinderkühlmantel-Rohrleitungselement (166), das mit dem zweiten Zylinderkühlmantel-Rohrleitungselement (164) über einen zweiten Zylinderkühlmantel-Verbindungsabschnitt (170) verbunden ist, einschließt, wobei,
in der ersten Kühlkonfiguration das erste Zylinderkühlmantel-Rohrleitungselement (162) dazu konfiguriert ist, den Zylinderkühlmantel-Auslass (150) mit dem ersten Zylinderkühlmantel-Verbindungsabschnitt (168) zu verbinden, das zweite Zylinderkühlmantel-Rohrleitungselement (164) dazu konfiguriert ist, den ersten Zylinderkühlmantel-Verbindungsabschnitt (168) mit dem zweiten Zylinderkühlmantel-Verbindungsabschnitt (170) zu verbinden, und das dritte Zylinderkühlmantel-Rohrleitungselement (166) dazu konfiguriert ist, den zweiten Zylinderkühlmantel-Verbindungsabschnitt (170) mit dem Kühlkreislaufabschnitt-Einlass (120) zu verbinden, und wobei,
in der zweiten Kühlkonfiguration das erste Zylinderkühlmantel-Rohrleitungselement (162) dazu konfiguriert ist, den Zylinderkühlmantel-Einlass (148) mit dem ersten Zylinderkühlmantel-Verbindungsabschnitt (168) zu verbinden, das zweite Zylinderkühlmantel-Rohrleitungselement (164) dazu konfiguriert ist, den ersten Zylinderkühlmantel-Verbindungsabschnitt (168) mit dem zweiten Zylinderkühlmantel-Verbindungsabschnitt (170) zu verbinden, und das dritte Zylinderkühlmantel-Rohrleitungselement (166) dazu konfiguriert ist, den zweiten Zylinderkühlmantel-Verbindungsabschnitt (170) mit dem Kühlkreislaufabschnitt-Auslass (118) zu verbinden.

3. Kühlsystem (100) nach Anspruch 2, wobei der Ladeluftkühler (106) mit dem Zylinderkühlmantel (108) über eine Ladeluftkühlerrohrleitung (110) verbunden ist, wobei die Ladeluftkühlerrohrleitung (110) ein erstes Ladeluftkühler-Rohrleitungselement (152), ein zweites Ladeluftkühler-Rohrleitungselement (154), das mit dem ersten Ladeluftkühler-Rohrleitungselement (152) über einen ersten Ladeluftkühler-Verbindungsabschnitt (158) verbunden ist, und ein drittes Ladeluftkühler-Rohrleitungselement (156), das mit dem zweiten Ladeluftkühler-Rohrleitungselement (154) über einen zweiten Ladeluftkühler-Verbindungsabschnitt (160) verbunden ist, einschließt, wobei
in der ersten Kühlkonfiguration das erste Ladeluftkühler-Rohrleitungselement (152) dazu konfiguriert ist, den zweiten Ladeluftkühler-Anschluss (132) mit dem ersten Ladeluftkühler-Verbindungsabschnitt (158) zu verbinden, das zweite Ladeluftkühler-Rohrleitungselement (154) dazu konfiguriert ist, den ersten Ladeluftkühler-Verbindungsabschnitt (158) mit dem zweiten Ladeluftkühler-Verbindungsabschnitt (160) zu verbinden, und das dritte Ladeluftkühler-Rohrleitungselement (156) dazu konfiguriert ist, den zweiten Ladeluftkühler-Verbindungsabschnitt (160) mit dem Zylinderkühlmantel-Einlass (148) zu verbinden, und wobei,
in der zweiten Kühlkonfiguration das erste Ladeluftkühler-Rohrleitungselement (152) dazu konfiguriert ist, den zweiten Ladeluftkühler-Anschluss (132) mit dem ersten Ladeluftkühler-Verbindungsabschnitt (158) zu verbinden, das zweite Ladeluftkühler-Rohrleitungselement (154) dazu konfiguriert ist, den ersten Ladeluftkühler-Verbindungsabschnitt (158) mit dem zweiten Ladeluftkühler-Verbindungsabschnitt (160) zu verbinden, und das dritte Ladeluftkühler-Rohrleitungselement (156) dazu konfiguriert ist, den zweiten Ladeluftkühler-Verbindungsabschnitt (160) mit dem Zylinderkühlmantel-Auslass (150) zu verbinden.

4. Kühlsystem (100) nach Anspruch 3, wobei, in der zweiten Kühlkonfiguration, das dritte Ladeluftkühler-Rohrleitungselement (156) und das erste Zylinderkühlmantel-Rohrleitungselement (162) einstückig als Querrohreinheit (300) ausgebildet sind, wobei die Querrohreinheit (300) dazu konfiguriert ist, den Zylinderkühlmantel-Einlass (148) mit dem ersten Zylinderkühlmantel-Verbindungsabschnitt (168) und den Zylinderkühlmantel-Auslass (150) mit dem zweiten Ladeluftkühler-Verbindungsabschnitt (160) zu verbinden.

5. Kühlsystem (100) nach einem der vorstehenden Ansprüche, wobei der Kühlkreislaufabschnitt (104), der Kühlkreislaufabschnitt-Einlass (120) und der Kühlkreislaufabschnitt-Auslass (118) für die erste Kühlkonfiguration und die zweite Kühlkonfiguration die gleiche feste Geometrie und die gleiche feste Stellung innerhalb des Kühlsystems (100) aufweisen und wobei die Strömungsrichtung des Kühlmittels innerhalb des Kühlkreislaufabschnitts (104) für die erste Kühlkonfiguration und die zweite Kühlkonfiguration die gleiche ist.

6. Kühlsystem (100) nach einem der vorstehenden Ansprüche, wobei der Ladeluftkühler (106) eine Unterseite (128) und eine der Unterseite (128) gegenüberliegende Oberseite (126) einschließt, wobei die Unterseite (128) den ersten Ladeluftkühler-Anschluss (130) und die Oberseite (126) den zweiten Ladeluftkühler-Anschluss (132) einschließt, wobei der erste Ladeluftkühler-Anschluss (130) einen ersten Ladeluftkühler-Einlass (134) und einen ersten Ladeluftkühler-Auslass (136) einschließt, der zweite Ladeluftkühler-Anschluss (132) einen zweiten Ladeluftkühler-Einlass (138) und einen zweiten Ladeluftkühler-Auslass (140) einschließt, wobei,
in der ersten Kühlkonfiguration der Kühlkreislaufabschnitt-Auslass (118) mit dem ersten Ladeluftkühler-Einlass (134) verbunden ist und der zweite Ladeluftkühler-Auslass (140) mit dem Zylinderkühlmantel-Einlass (148) verbunden ist, und wobei,
in der zweiten Kühlkonfiguration der Kühlkreislaufabschnitt-Einlass (120) mit dem ersten Ladeluftkühler-Auslass (136) verbunden ist und der zweite Ladeluftkühler-Einlass (138) mit dem Zylinderkühlmantel-Auslass (150) verbunden ist.

7. Kühlsystem (100) nach einem der vorstehenden Ansprüche, wobei der Ladeluftkühler (106) ein zweistufiger Ladeluftkühler (106) ist, der eine Hochtemperatur-Ladeluftkühlstufe (124) und eine Niedertemperatur-Ladeluftkühlstufe (142) einschließt, wobei der Zylinderkühlmantel (108) und der Kühlkreislaufabschnitt (104) in der ersten und der zweiten Kühlkonfiguration mit der Hochtemperatur-Ladeluftkühlstufe (124) verbunden sind.

8. Kühlsystem (100) nach Anspruch 7, wobei das Kühlsystem (100) ferner einen Niedertemperatur-Kühlkreislauf (144) umfasst, der mit der Niedertemperatur-Ladeluftkühlstufe (142) verbunden ist.

9. Kühlsystem (100) nach einem der vorstehenden Ansprüche, wobei das Kühlsystem (100) ferner ein Wärmeabzugssystem (122) umfasst, das mit dem Kühlkreislaufabschnitt (104) verbunden und zum Abziehen von Wärme aus dem Kühlmittel konfiguriert ist.

10. Kühlsystem (100) nach Anspruch 9, wobei in der ersten Kühlkonfiguration das Wärmeabzugssystem (122) ein Wärmerückgewinnungssystem (122) ist, das zur Rückgewinnung von Wärme aus dem Kühlmittel konfiguriert ist, und wobei,
in der zweiten Kühlkonfiguration das Wärmeabzugssystem (122) ein Wärmeabgabesystem (122) ist, das zum Abgeben von Wärme des Kühlmittels an die Umgebung konfiguriert ist.

11. Kühlsystem (100) nach einem der vorstehenden Ansprüche, wobei eine Kühlmittelauslass-Temperatur am Kühlkreislaufabschnitt-Auslass in der ersten Kühlkonfiguration gleich oder unterhalb einer Kühlmittelauslass-Schwellentemperatur und in der zweiten Kühlkonfiguration oberhalb der Kühlmittelauslass-Schwellentemperatur liegt, wobei die Kühlmittelauslass-Schwellentemperatur am Kühlkreislaufabschnitt-Auslass (118) in einem Bereich von etwa 70 °C bis etwa 80 °C liegt.

12. Kühlsystem (100) nach einem der vorstehenden Ansprüche, wobei eine Kühlmittelauslass-Temperatur am Kühlkreislaufabschnitt-Auslass (118) in einem Bereich von etwa 60 °C bis etwa 80 °C liegt und eine Kühlmitteleinlass-Temperatur am Kühlkreislaufabschnitt-Einlass in einem Bereich von etwa 90 °C bis etwa 105 °C liegt.

13. Verwendung eines Satzes von austauschbaren Rohreinheiten zum Konfigurieren eines Kühlsystems (100) einer Brennkraftmaschine (102) in einer ersten Kühlkonfiguration und in einer zweiten Kühlkonfiguration, wobei das Kühlsystem (100) eine Ladeluftkühler-Rohrleitung (110) mit einem ersten Ladeluftkühler-Verbindungsabschnitt (158) und einem zweiten Ladeluftkühler-Verbindungsabschnitt (160), einen Zylinderkühlmantel (102) mit einem Zylinderkühlmantel-Einlass (148) und einem Zylinderkühlmantel-Auslass (150) und eine Zylinderkühlmantel-Rohrleitung (112) mit einem ersten Zylinderkühlmantel-Verbindungsabschnitt (168) und einem zweiten Zylinderkühlmantel-Verbindungsabschnitt (170) einschließt, wobei der Satz von austauschbaren Rohreinheiten eine Direktrohreinheit (200) und eine Querrohreinheit (300) einschließt, wobei,
in der ersten Kühlkonfiguration die Direktrohreinheit (200) dazu konfiguriert ist, den zweiten Ladeluftkühler-Verbindungsabschnitt (160) mit dem Zylinderkühlmantel-Einlass (148) und den Zylinderkühlmantel-Auslass (150) mit dem ersten Zylinderkühlmantel-Verbindungsabschnitt (168) zu verbinden, und wobei,
in der zweiten Kühlkonfiguration die Querrohreinheit (300) dazu konfiguriert ist, den Zylinderkühlmantel-Einlass (148) mit dem ersten Zylinderkühlmantel-Verbindungsabschnitt (168) und den Zylinderkühlmantel-Auslass (150) mit dem zweiten Ladeluftkühler-Verbindungsabschnitt (160) zu verbinden.

14. Brennkraftmaschine (102), umfassend:
eine Zylindereinheit (114);
einen Turbolader (115), der dazu konfiguriert ist, die Zylindereinheit (114) mit Ladeluft zu versorgen; und
ein Kühlsystem (100) nach einem der Ansprüche 1 bis 12.

15. Verfahren zum Konfigurieren eines Kühlsystems (100) für eine Brennkraftmaschine (102), wobei das Kühlsystem (100) einen Kühlkreislaufabschnitt (104) mit einem Kühlkreislaufabschnitt-Auslass (118) und einem Kühlkreislaufabschnitt-Einlass (120), einen Ladeluftkühler (106) mit einem ersten Ladeluftkühler-Anschluss (130) und einem zweiten Ladeluftkühler-Anschluss (132) und einen Zylinderkühlmantel (108) mit einem Zylinderkühlmantel-Einlass (148) und einem Zylinderkühlmantel-Auslass (150) einschließt, wobei das Kühlsystem (100) eine erste Kühlkonfiguration, wobei der Kühlkreislaufabschnitt-Auslass (118) mit einem ersten Ladeluftkühler-Anschluss (130) verbunden ist, der zweite Ladeluftkühler-Anschluss (132) mit dem Zylinderkühlmantel-Einlass (148) verbunden ist und der Zylinderkühlmantel-Auslass (150) mit dem Kühlkreislaufabschnitt-Einlass (120) verbunden ist, und eine zweite Kühlkonfiguration einschließt, wobei der Kühlkreislaufabschnitt-Auslass (118) mit dem Zylinderkühlmantel-Einlass (148) verbunden ist, der Zylinderkühlmantel-Auslass (150) mit dem zweiten Ladeluftkühler-Anschluss (132) verbunden ist und der erste Ladeluftkühler-Anschluss (130) mit dem Kühlkreislaufabschnitt-Einlass (120) verbunden ist, wobei das Verfahren umfasst:
Bestimmen einer ersten Kühlmittelauslass-Temperatur am Zylinderkühlmantel-Auslass (150) für die erste Kühlkonfiguration;
Bestimmen einer zweiten Kühlmittelauslass-Temperatur an dem Zylinderkühlmantel-Auslass (150) für die zweite Kühlkonfiguration;
Konfigurieren des Kühlsystems (100) in der zweiten Kühlkonfiguration, wenn die erste Kühlmittelauslass-Temperatur eine erste Auslass-Schwellentemperatur überschreitet; und/oder
Konfigurieren des Kühlsystems (100) in der ersten Kühlkonfiguration, wenn die zweite Kühlmittelauslass-Temperatur eine zweite Auslass-Schwellentemperatur nicht überschreitet.

## Revendications

1. Système de refroidissement (100) destiné à un moteur à combustion interne (102) incluant une unité de cylindre (114), le système de refroidissement (100) comprenant :
une partie de circuit de refroidissement (104) configurée pour faire circuler un écoulement de liquide de refroidissement, la partie de circuit de refroidissement (104) incluant une sortie de partie de circuit de refroidissement (118) et une entrée de partie de circuit de refroidissement (120), la sortie de partie de circuit de refroidissement (118) et l'entrée de partie de circuit de refroidissement (120) définissant une direction d'écoulement de liquide de refroidissement au sein de la partie de circuit de refroidissement (104) allant de l'entrée de partie de circuit de refroidissement (120) à la sortie de partie de circuit de refroidissement (118) ;
un refroidisseur d'air de suralimentation (106) configuré pour transférer de la chaleur de l'air de suralimentation vers le liquide de refroidissement, le refroidisseur d'air de suralimentation (106) incluant un premier orifice de refroidisseur d'air de suralimentation (130), et un deuxième orifice de refroidisseur d'air de suralimentation (132) ; et
une chemise de refroidissement de cylindre (108) configurée pour transférer de la chaleur de l'unité de cylindre (114) vers le liquide de refroidissement, la chemise de refroidissement de cylindre (108) incluant une entrée de chemise de refroidissement de cylindre (148), et une sortie de chemise de refroidissement de cylindre (150), **caractérisé en ce que,**
dans une première configuration de refroidissement, la sortie de partie de circuit de refroidissement (118) est raccordée au premier orifice de refroidisseur d'air de suralimentation (130), le deuxième orifice de refroidisseur d'air de suralimentation (132) est raccordé à l'entrée de chemise de refroidissement de cylindre (148), et la sortie de chemise de refroidissement de cylindre (150) est raccordée à l'entrée de partie de circuit de refroidissement (120), et dans lequel,
dans une deuxième configuration de refroidissement, la sortie de partie de circuit de refroidissement (118) est raccordée à l'entrée de chemise de refroidissement de cylindre (148), la sortie de chemise de refroidissement de cylindre (150) est raccordée au deuxième orifice de refroidisseur d'air de suralimentation (132) et le premier orifice de refroidisseur d'air de suralimentation (130) est raccordé à l'entrée de partie de circuit de refroidissement (120).

2. Système de refroidissement (100) selon la revendication 1, dans lequel la partie de circuit de refroidissement (104) est raccordée à la chemise de refroidissement de cylindre (106) via une tuyauterie de chemise de refroidissement de cylindre (112), la tuyauterie de chemise de refroidissement de cylindre (112) incluant un premier élément de tuyauterie de chemise de refroidissement de cylindre (162), un deuxième élément de tuyauterie de chemise de refroidissement de cylindre (164) raccordé au premier élément de tuyauterie de chemise de refroidissement de cylindre (162) via une première partie de raccordement de chemise de refroidissement de cylindre (168), et un troisième élément de tuyauterie de chemise de refroidissement de cylindre (166) raccordé au deuxième élément de tuyauterie de chemise de refroidissement de cylindre (164) via une deuxième partie de raccordement de chemise de refroidissement de cylindre (170), dans lequel,
dans la première configuration de refroidissement, le premier élément de tuyauterie de chemise de refroidissement de cylindre (162) est configuré pour raccorder la sortie de chemise de refroidissement de cylindre (150) à la première partie de raccordement de chemise de refroidissement de cylindre (168), le deuxième élément de tuyauterie de chemise de refroidissement de cylindre (164) est configuré pour raccorder la première partie de raccordement de chemise de refroidissement de cylindre (168) à la deuxième partie de raccordement de chemise de refroidissement de cylindre (170), et le troisième élément de tuyauterie de chemise de refroidissement de cylindre (166) est configuré pour raccorder la deuxième partie de raccordement de chemise de refroidissement de cylindre (170) à l'entrée de partie de circuit de refroidissement (120), et dans lequel,
dans la deuxième configuration de refroidissement, le premier élément de tuyauterie de chemise de refroidissement de cylindre (162) est configuré pour raccorder l'entrée de chemise de refroidissement de cylindre (148) à la première partie de raccordement de chemise de refroidissement de cylindre (168), le deuxième élément de tuyauterie de chemise de refroidissement de cylindre (164) est configuré pour raccorder la première partie de raccordement de chemise de refroidissement de cylindre (168) à la deuxième partie de raccordement de chemise de refroidissement de cylindre (170), et le troisième élément de tuyauterie de chemise de refroidissement de cylindre (166) est configuré pour raccorder la deuxième partie de raccordement de chemise de refroidissement de cylindre (170) à la sortie de partie de circuit de refroidissement (118).

3. Système de refroidissement (100) selon la revendication 2, dans lequel le refroidisseur d'air de suralimentation (106) est raccordé à la chemise de refroidissement de cylindre (108) via une tuyauterie de refroidisseur d'air de suralimentation (110), la tuyauterie de refroidisseur d'air de suralimentation (110) incluant un premier élément de tuyauterie de refroidisseur d'air de suralimentation (152), un deuxième élément de tuyauterie de refroidisseur d'air de suralimentation (154) raccordé au premier élément de tuyauterie de refroidisseur d'air de suralimentation (152) via une première partie de raccordement de refroidisseur d'air de suralimentation (158) et un troisième élément de tuyauterie de refroidisseur d'air de suralimentation (156) raccordé au deuxième élément de tuyauterie de refroidisseur d'air de suralimentation (154) via une deuxième partie de raccordement de refroidisseur d'air de suralimentation (160), dans lequel
dans la première configuration de refroidissement, le premier élément de tuyauterie de refroidisseur d'air de suralimentation (152) est configuré pour raccorder le deuxième orifice de refroidisseur d'air de suralimentation (132) à la première partie de raccordement de refroidisseur d'air de suralimentation (158), le deuxième élément de tuyauterie de refroidisseur d'air de suralimentation (154) est configuré pour raccorder la première partie de raccordement de refroidisseur d'air de suralimentation (158) à la deuxième partie de raccordement de refroidisseur d'air de suralimentation (160), et le troisième élément de tuyauterie de refroidisseur d'air de suralimentation (156) est configuré pour raccorder la deuxième partie de raccordement de refroidisseur d'air de suralimentation (160) à l'entrée de chemise de refroidissement de cylindre (148), et dans lequel,
dans la deuxième configuration de refroidissement, le premier élément de tuyauterie de refroidisseur d'air de suralimentation (152) est configuré pour raccorder le deuxième orifice de refroidisseur d'air de suralimentation (132) à la première partie de raccordement de refroidisseur d'air de suralimentation (158), le deuxième élément de tuyauterie de refroidisseur d'air de suralimentation (154) est configuré pour raccorder la première partie de raccordement de refroidisseur d'air de suralimentation (158) à la deuxième partie de raccordement de refroidisseur d'air de suralimentation (160), et le troisième élément de tuyauterie de refroidisseur d'air de suralimentation (156) est configuré pour raccorder la deuxième partie de raccordement de refroidisseur d'air de suralimentation (160) à la sortie de chemise de refroidissement de cylindre (150).

4. Système de refroidissement (100) selon la revendication 3, dans lequel, dans la deuxième configuration de refroidissement, le troisième élément de tuyauterie de refroidisseur d'air de suralimentation (156) et le premier élément de tuyauterie de chemise de refroidissement de cylindre (162) sont formés d'un seul tenant en tant qu'unité de tuyau transversal (300), l'unité de tuyau transversal (300) étant configurée pour raccorder l'entrée de chemise de refroidissement de cylindre (148) à la première partie de raccordement de chemise de refroidissement de cylindre (168), et la sortie de chemise de refroidissement de cylindre (150) à la deuxième partie de raccordement de refroidisseur d'air de suralimentation (160).

5. Système de refroidissement (100) selon l'une quelconque des revendications précédentes, dans lequel la partie de circuit de refroidissement (104), l'entrée de partie de circuit de refroidissement (120), et la sortie de partie de circuit de refroidissement (118) ont la même géométrie fixe et la même position fixe au sein du système de refroidissement (100) pour la première configuration de refroidissement et la deuxième configuration de refroidissement, et dans lequel la direction d'écoulement de liquide de refroidissement au sein de la partie de circuit de refroidissement (104) est la même pour la première configuration de refroidissement et la deuxième configuration de refroidissement.

6. Système de refroidissement (100) selon l'une quelconque des revendications précédentes, dans lequel le refroidisseur d'air de suralimentation (106) inclut un côté inférieur (128) et un côté supérieur (126) opposé au côté inférieur (128), le côté inférieur (128) incluant le premier orifice de refroidisseur d'air de suralimentation (130) et le côté supérieur (126) incluant le deuxième orifice de refroidisseur d'air de suralimentation (132), le premier orifice de refroidisseur d'air de suralimentation (130) incluant une première entrée de refroidisseur d'air de suralimentation (134) et une première sortie de refroidisseur d'air de suralimentation (136), le deuxième orifice de refroidisseur d'air de suralimentation (132) incluant une deuxième entrée de refroidisseur d'air de suralimentation (138) et une deuxième sortie de refroidisseur d'air de suralimentation (140), dans lequel,
dans la première configuration de refroidissement, la sortie de partie de circuit de refroidissement (118) est raccordée à la première entrée de refroidisseur d'air de suralimentation (134) et la deuxième sortie de refroidisseur d'air de suralimentation (140) est raccordée à l'entrée de chemise de refroidissement de cylindre (148), et dans lequel,
dans la deuxième configuration de refroidissement, l'entrée de partie de circuit de refroidissement (120) est raccordée à la première sortie de refroidisseur d'air de suralimentation (136) et la deuxième entrée de refroidisseur d'air de suralimentation (138) est raccordée à la sortie de chemise de refroidissement de cylindre (150).

7. Système de refroidissement (100) selon l'une quelconque des revendications précédentes, dans lequel le refroidisseur d'air de suralimentation (106) est un refroidisseur d'air de suralimentation à deux étages (106) incluant un étage de refroidissement d'air de suralimentation à haute température (124) et un étage de refroidissement d'air de suralimentation à basse température (142), dans lequel la chemise de refroidissement de cylindre (108) et la partie de circuit de refroidissement (104) sont raccordées à l'étage de refroidissement d'air de suralimentation à haute température (124) dans la première et la deuxième configuration de refroidissement.

8. Système de refroidissement (100) selon la revendication 7, dans lequel le système de refroidissement (100) comprend en outre un circuit de refroidissement à basse température (144) raccordé à l'étage de refroidissement d'air de suralimentation à basse température (142).

9. Système de refroidissement (100) selon l'une quelconque des revendications précédentes, dans lequel le système de refroidissement (100) comprend en outre un système d'extraction de chaleur (122) raccordé à la partie de circuit de refroidissement (104) et configuré pour extraire de la chaleur du liquide de refroidissement.

10. Système de refroidissement (100) selon la revendication 9, dans lequel, dans la première configuration de refroidissement, le système d'extraction de chaleur (122) est un système de récupération de chaleur (122) configuré pour récupérer de la chaleur du liquide de refroidissement, et dans lequel,
dans la deuxième configuration de refroidissement, le système d'extraction de chaleur (122) est un système de dissipation de chaleur (122) configuré pour dissiper de la chaleur du liquide de refroidissement vers l'environnement.

11. Système de refroidissement (100) selon l'une quelconque des revendications précédentes, dans lequel une température de sortie de liquide de refroidissement à la sortie de la partie de circuit de refroidissement est égale ou inférieure à une température seuil de sortie de liquide de refroidissement dans la première configuration de refroidissement, et supérieure à la température seuil de sortie de liquide de refroidissement dans la deuxième configuration de refroidissement, dans lequel la température seuil de sortie de liquide de refroidissement à la sortie de la partie de circuit de refroidissement (118) est dans une plage d'environ 70 °C à environ 80 °C.

12. Système de refroidissement (100) selon l'une quelconque des revendications précédentes, dans lequel une température de sortie de liquide de refroidissement à la sortie de partie de circuit de refroidissement (118) est dans une plage d'environ 60 °C à environ 80 °C, et une température d'entrée de liquide de refroidissement à l'entrée de partie de circuit de refroidissement est dans une plage d'environ 90 °C à environ 105 °C.

13. Utilisation d'un ensemble d'unités de tuyau interchangeables pour configurer un système de refroidissement (100) d'un moteur à combustion interne (102) dans une première configuration de refroidissement et dans une deuxième configuration de refroidissement, le système de refroidissement (100) incluant une tuyauterie de refroidisseur d'air de suralimentation (110) avec une première partie de raccordement de refroidisseur d'air de suralimentation (158) et une deuxième partie de raccordement de refroidisseur d'air de suralimentation (160), une chemise de refroidissement de cylindre (102) avec une entrée de chemise de refroidissement de cylindre (148) et une sortie de chemise de refroidissement de cylindre (150), et une tuyauterie de chemise de refroidissement de cylindre (112) avec une première partie de raccordement de chemise de refroidissement de cylindre (168) et une deuxième partie de raccordement de chemise de refroidissement de cylindre (170), l'ensemble d'unités de tuyau interchangeables incluant une unité de tuyau direct (200) et une unité de tuyau transversal (300), dans lequel,
dans la première configuration de refroidissement, l'unité de tuyau direct (200) est configurée pour raccorder la deuxième partie de raccordement de refroidisseur d'air de suralimentation (160) à l'entrée de chemise de refroidissement de cylindre (148), et la sortie de chemise de refroidissement de cylindre (150) à la première partie de raccordement de chemise de refroidissement de cylindre (168), et dans lequel,
dans la deuxième configuration de refroidissement, l'unité de tuyau transversal (300) est configurée pour raccorder l'entrée de chemise de refroidissement de cylindre (148) à la première partie de raccordement de chemise de refroidissement de cylindre (168), et la sortie de chemise de refroidissement de cylindre (150) à la deuxième partie de raccordement de refroidisseur d'air de suralimentation (160).

14. Moteur à combustion interne (102), comprenant :
une unité de cylindre (114) ;
un turbocompresseur (115) configuré pour fournir de l'air de suralimentation à l'unité de cylindre (114) ; et
un système de refroidissement (100) selon l'une quelconque des revendications 1 à 12.

15. Procédé pour configurer un système de refroidissement (100) destiné à un moteur à combustion interne (102), le système de refroidissement (100) incluant une partie de circuit de refroidissement (104) ayant une sortie de partie de circuit de refroidissement (118) et une entrée de partie de circuit de refroidissement (120), un refroidisseur d'air de suralimentation (106) ayant un premier orifice de refroidisseur d'air de suralimentation (130) et un deuxième orifice de refroidisseur d'air de suralimentation (132), et une chemise de refroidissement de cylindre (108) avec une entrée de chemise de refroidissement de cylindre (148) et une sortie de chemise de refroidissement de cylindre (150), le système de refroidissement (100) incluant une première configuration de refroidissement, dans lequel la sortie de partie de circuit de refroidissement (118) est raccordée au premier orifice de refroidisseur d'air de suralimentation (130), le deuxième orifice de refroidisseur d'air de suralimentation (132) est raccordé à l'entrée de chemise de refroidissement de cylindre (148), et la sortie de chemise de refroidissement de cylindre (150) est raccordée à l'entrée de partie de circuit de refroidissement (120), et une deuxième configuration de refroidissement, dans lequel la sortie de partie de circuit de refroidissement (118) est raccordée à l'entrée de chemise de refroidissement de cylindre (148), la sortie de chemise de refroidissement de cylindre (150) est raccordée au deuxième orifice de refroidisseur d'air de suralimentation (132) et le premier orifice de refroidisseur d'air de suralimentation (130) est raccordé à l'entrée de partie de circuit de refroidissement (120), le procédé comprenant :
la détermination d'une première température de sortie de liquide de refroidissement au niveau de la sortie de chemise de refroidissement de cylindre (150) pour la première configuration de refroidissement ;
la détermination d'une deuxième température de sortie de liquide de refroidissement au niveau de la sortie de chemise de refroidissement de cylindre (150) pour la deuxième configuration de refroidissement ;
la configuration du système de refroidissement (100) dans la deuxième configuration de refroidissement si la première température de sortie de liquide de refroidissement dépasse une première température seuil de sortie ; et/ou
la configuration du système de refroidissement (100) dans la première configuration de refroidissement si la deuxième température de sortie de liquide de refroidissement ne dépasse pas une deuxième température seuil de sortie.
